# EUROPEAN PATENT SPECIFICATION

(11) **EP 3 623 738 B1**
(45) Date of publication and mention of the grant of the patent: **16.12.2020**
(21) Application number: 18831266.4
(22) Date of filing: 02.07.2018
(51) Int. Cl.: F28F 1/02, B23K 1/00, B23K 1/19, B60H 1/32, F28D 1/053, F28F 1/40, F28F 1/42, F28F 19/06

(54) **HEAT EXCHANGER TUBE**
WÄRMETAUSCHERRÖHRE
TUBE D'ÉCHANGEUR DE CHALEUR

(30) Priority: 14.07.2017 JP 2017138373
(43) Date of publication of application: 18.03.2020
(73) Proprietor: Japan Climate Systems Corporation, Higashihiroshima-shi, Hiroshima 739-0153 (JP)
(72) Inventor: YOSHIDA Takashi, Higashihiroshima-shi Hiroshima 739-0153 (JP); UENO Yasunori, Higashihiroshima-shi Hiroshima 739-0153 (JP); SHINTANI Yoshihiro, Higashihiroshima-shi Hiroshima 739-0153 (JP)
(74) Representative: Delorme, Nicolas
(86) International application number: PCT/JP2018/025035
(87) International publication number: WO 2019/013024

(56) References cited:
- DE-T5-112015 000 904
- FR-A1- 2 769 359
- FR-A1- 2 769 359
- JP-A- H11 183 073
- JP-A- 2005 106 389
- JP-A- 2014 149 137
- JP-A- 2016 223 725
- US-A1- 2016 356 555

## Description

### TECHNICAL FIELD

The present invention relates to a heat exchanger tube that configures an element of a refrigeration cycle of an air conditioner and, in particular, belongs to the technical field of structures configured by bending plate materials. In particular, the invention relates to a heat exchanger tube as defined by the preamble of claim 1, and as disclosed in DE 11 2015 000 904.

### BACKGROUND ART

Conventionally, air conditioners for vehicles have heat exchangers provided in the vehicle compartment and outside the vehicle compartment. For heat exchangers provided outside the vehicle compartment, the inventions disclosed in Patent Documents 1 and 2 are known. The heat exchanger of Patent Document 1 includes a core as well as header tanks provided at both end sections of the core. The core is alternately laminated with a plurality of tubes and fins; and the tubes are configured as flat tubes each having a flat cross-section and extending in the airflow direction of outside air. This tube is configured by bending one sheet of plate material and includes an upper plate section and a lower plate section extending in the airflow direction. The plate material constituting the tube is layered in the thickness direction of the plate material at one end section of the tube in the airflow direction of outside air, and is arranged so that this end section of the plate material overlaps with the other end section of the plate material. In addition, an inner fin is provided in a refrigerant flow path formed inside the tube.

The tube from Patent Document 2 is also a flat tube. The tube from Patent Document 2 is made of one sheet of plate material and the tube body part and inner fin are configured by bending this plate material. In addition, the plate material is layered in the thickness direction of the plate material at one end section and the other end section of the tube in the airflow direction of the outside air.

### CITATION LIST

### PATENT DOCUMENTS

PATENT DOCUMENT 1: Japanese Unexamined Patent Publication No. 2005-106389
PATENT DOCUMENT 2: Japanese Unexamined Patent Publication No. 2014-149137

### SUMMARY OF THE INVENTION

### TECHNICAL PROBLEM

Since the tube body part and the inner fin of the tube of Patent Document 2 is configured with one sheet of plate material, the thickness of the tube body part and the thickness of the inner fin are the same as each other. In this case, the thickness of the plate material is set to a thickness capable of fulfilling the pressure resistance requirements of the tube. However, pressure resistance is not required for the inner fin as it is required for the tube since the inner fin is arranged in the refrigerant flow path; and, when the tube body part and the inner fin are comprised of one plate material sheet as in Patent Document 2, the inner fin becomes thicker than necessary, which leads to an increase in the weight of the heat exchanger.

To avoid this, it is conceivable to have the tube body part and the inner fin be made of separate plate materials as in Patent Document 1. By doing so, it is possible to easily change the thickness of the tube body part and the thickness of the inner fin and reduce the weight of the tube while keeping satisfactory pressure resistance.

Furthermore, in the case of the tube of Patent Document 1, since the one end section of the tube in the airflow direction of outside air is made of two or three layers of the plate material constituting the tube, it is possible to reduce damage to the tube by foreign objects such as pebbles that fly toward the tube during running of the vehicle, by assembling the layered section of the plate material to the front side of the vehicle.

However, in the case of Patent Document 1, there is a concern that the following problems may occur. In Patent Document 1, since one end section of the plate material is arranged so as to layered on another section of the plate material at the one end section of the tube in the airflow direction of outside air, it is difficult for this section to have compression force applied to it while the tube and fin are in a laminated state before the tube is brazed to the fin. If compression force is applied, the one end section of the plate material ends up deforming and opening up and separates from the other section of the plate material, which makes it easy for brazing defects to occur. Furthermore, since the one end section of the plate material tends to open as described above, when inserting the tube into a tube insertion hole of the header tank, there is a risk that the one end section of the plate material will likely interfere with the periphery of the tube insertion hole and scrape the inner peripheral surface of the tube insertion hole.

It is therefore an objective of the present invention, when forming a tube body part and an inner fin as separate parts and hence reducing weight of a tube, to reduce brazing defects of a plate material that constitutes the tube body part and reduce interference in inserting a tube into a tube insertion hole of a header tank.

### SOLUTION TO THE PROBLEM

In order to achieve the above objective, in the present invention, the plate material is joined at an intermediate section of the tube body part in an airflow direction of outside air, and the plate material is also layered on the inner surface of an end-wall section of the tube body part, thereby ensuring the strength.

The first aspect of the invention is directed to a heat exchanger tube which is integrated with a fin while being stacked on the fin and which is inserted into a tube insertion hole formed in a header tank to constitute a heat exchanger. The heat exchanger tube includes: a tube body part which is obtained by bending one sheet of a plate material and which forms a refrigerant flow path having a long, flat cross section in an airflow direction of outside air; and an inner fin which is made of a plate material different from the plate material forming the tube body part and which is arranged in the refrigerant flow path. The tube body part includes: a first flat wall section and a second flat wall section which extend in the airflow direction of outside air and are spaced from each other in a thickness direction of the tube body part; an end-wall section on one side which connects one end section of the first flat wall section in the airflow direction of outside air and one end section of the second flat wall section in the airflow direction of outside air; and an end-wall section on the other side which connects the other end section of the first flat wall section in the airflow direction of outside air and the other end section of the second flat wall section in the airflow direction of outside air. The plate material forming the tube body part is bent toward the other side at the one end section of the first flat wall section in the airflow direction of outside air and is bent toward the one side at the other end section of the first flat wall section in the airflow direction of outside air, and the plate material forming the tube body part includes: a first middle column section and a second middle column section which protrude from an intermediate section of the second flat wall section in the airflow direction of outside air toward an inner surface of the first flat wall section and are joined to the inner surface of the first flat wall section; and an overlapping section extending from a protruding end of the first middle column section toward an inner surface of the end-wall section on one side and layered on, and joined to, the inner surface of the end-wall section on one side.

According to this configuration, the plate material forming the tube body part and the plate material forming the inner fin are separate from each other. It is therefore possible to easily change the thickness of the plate material forming the tube body part and the thickness of the plate material forming the inner fin and reduce the weight of the tube while keeping a satisfactory pressure resistance.

Furthermore, the plate material forming the tube body part includes the first middle column section and the second middle column section, which protrude from an intermediate section of the second flat wall section in the airflow direction of outside air toward the inner surface of the first flat wall section and joined to the inner surface of the first flat wall section. Thus, the compression force acting while the tube and the fin are stacked before the tube is brazed to the fin acts such that the first middle column section and the second middle column section are pushed against the inner surface of the first flat wall section. This configuration prevents the plate material forming the tube body part from opening, which reduces defects in brazing.

Additionally, since the overlapping section of the plate material is layered on, and joined to, the end-wall section on one side of the tube main body, damage to the end-wall section on one side is reduced when foreign substances hit the outside of the end-wall section on one side. Since the overlapping section of the plate material is joined to the inner surface of the end-wall section on one side, the end section of the plate material is not positioned at the end section, in the airflow direction of outside air, of the outer surface of the tube body part; therefore, the end section of the plate material does not interfere with the periphery of the tube insertion hole of the header tank.

A second aspect of the invention is an embodiment of the first aspect. In the second aspect, the first middle column section of the tube body part is disposed at a portion of the second flat wall section toward the end-wall section on one side.

According to this configuration, the first middle column section is positioned toward the end-wall section on one side of the tube body part, which makes the distance from the protruding end of the first middle column section to the end-wall section on one side shorter. Thus, of the plate material forming the tube body part, the length of the plate material from the protruding end of the first middle column section to the end-wall section on one side can be shortened.

A third aspect of the invention is an embodiment of the first aspect. In the third aspect, the end-wall section on one side of the tube body part has a shape different from a shape of the end-wall section on the other side.

According to this configuration, since the shapes of the end-wall section on one side and end-wall section on the other side of the tube body part are different from each other, it is possible to prevent erroneous assembly and have the tube correctly assembled, i.e., to assemble the tube such that the end-wall section on one side is positioned at the upstream side in the airflow direction of outside air.

A fourth aspect of the invention is an embodiment of the first aspect. In the fourth aspect, the end-wall section on one side of the tube body part is configured as a flat wall extending in a direction that intersects with the airflow direction of outside air.

According to this configuration, the flat wall section receives a foreign object that hits the end-wall section on one side; therefore, damage to the end-wall section on one side is reduced.

A fifth aspect of the invention is an embodiment of the first aspect. In the fifth aspect, the inner fin is arranged in the tube body part between the end-wall section on the other side and the second middle column section and divides the refrigerant flow path of the tube body part into a plurality of sections.

According to this configuration, since the refrigerant flow path is divided into a plurality of sections by the inner fin, the heat exchange efficiency is further enhanced.

A sixth aspect of the invention is an embodiment of the first aspect. In the sixth aspect, the plate material forming the inner fin is thinner than the plate material forming the tube body part.

A seventh aspect of the invention is an embodiment of the first aspect. In the seventh aspect, the plate material forming the tube body part is a double-sided clad material having a brazing filler metal clad on both surfaces of the plate material, and the plate material forming the inner fin is a non-clad material that is not clad with a brazing filler metal.

According to this configuration, the inner fin is brazed to the tube body part with the brazing filler metal of the plate material forming the tube body part.

An eighth aspect of the invention is an embodiment of the seventh aspect. In the eighth aspect, of the brazing filler metal provided on the plate material forming the tube body part, the brazing filler metal provided on an outer surface of the tube body part contains zinc.

According to this configuration, the outer surface of the tube body part becomes lower in potential than the plate material, which causes surface corrosion instead of pitting corrosion.

A ninth aspect of the invention is an embodiment of the eighth aspect. In the ninth aspect, a zinc content in the brazing filler metal is in a range from 0.5 wt% to 5.0 wt%.

According to this configuration, pitting corrosion is much less likely to occur in the tube body part.

A tenth aspect of the invention is an embodiment of the first aspect. In the tenth aspect, the second flat wall section of the tube body part constitutes a lower portion of the tube body part.

Specifically, moisture, which is a cause of corrosion for the tube body part, tends to accumulate on the upper surface of the tube body part. In the present invention, the second flat wall section forms the lower portion of the tube body part; therefore, the joint section of the first middle column section and the second middle column section is located at the lower position. Accordingly, moisture is less likely to accumulate in the joint section between the first middle column section and the second middle column section, which reduces the progression of corrosion from the joint section.

### ADVANTAGES OF THE INVENTION

According to the first aspect of the invention, in a case in which separate plate materials are used for the tube body part and the inner fin to reduce the weight of the tube, the following configuration of the plate material forming the tube body part contributes to reduce defects in brazing: the plate material forming the tube body part includes the first middle column section and the second middle column section protruding from an intermediate section, in the airflow direction of outside air, of the second flat wall section of the tube body part toward the inner surface of the first flat wall section and joined to the inner surface of the first flat wall section. Furthermore, since the overlapping section of the plate material is layered on the inner surface of the end-wall section on one side of the tube body part, interference in inserting the tube into the tube insertion hole of the header tank can be reduced.

According to the second aspect of the invention, since the first middle column section of the tube body part is disposed toward the end-wall section on one side of the tube body part, the length of a portion of the plate material forming the tube body part extending from the protruding end of the first middle column section to the end-wall section on one side is shortened. This configuration makes it possible to further reduce the weight.

According to the third aspect of the invention, since the shape of the end-wall section on one side and the shape of the end-wall section on the other side of the tube body part are different from each other, it is possible to reduce errors during assembly.

According to the fourth aspect of the invention, since the end-wall section on one side of the tube body part is configured as a flat wall, damage by a foreign object hitting the end-wall section on one side can be reduced.

According to the fifth aspect of the invention, since the refrigerant flow path of the tube body part is divided into a plurality of sections by the inner fin, heat exchange efficiency can be further enhanced.

According to the sixth aspect of the invention, it is possible to reduce the weight of the tube while sufficiently securing the pressure resistance of the tube body part.

According to the seventh aspect of the invention, it is possible to reduce cost by using a non-clad material as the plate material forming the inner fin.

According to the eighth aspect of the invention, of the brazing filler metal provided on the plate material forming the tube body part, the brazing filler metal provided on the outer surface of the tube body part contains zinc. This configuration leads to surface corrosion and can reduce the possibility of a hole opening in the tube body part.

According to the ninth aspect of the invention, since a zinc content in the brazing filler metal is set to be in a range from 0.5 wt% to 5.0 wt%, pitting corrosion of the tube body part is much less likely to occur.

According to the tenth aspect of the invention, moisture is less likely to accumulate in the joint section between the first middle column section and the second middle column section, which reduces the progression of corrosion from the joint section.

### BRIEF DESCRIPTION OF THE DRAWINGS

FIG. 1 is a perspective view of a heat exchanger equipped with a heat exchanger tube according to an embodiment of the present invention, as viewed from the downstream side of the airflow direction of outside air.
FIG. 2 is a perspective view showing a state before the heat exchanger tube is inserted into a left header tank.

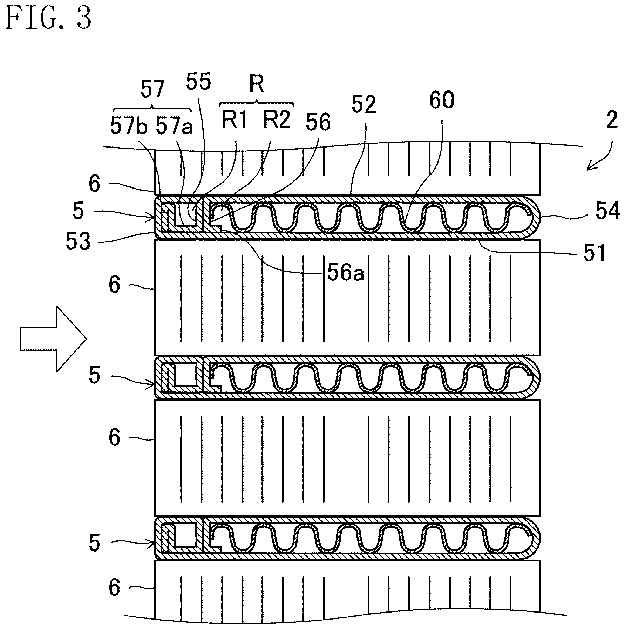

FIG. 3 is a left-side view of a core.
FIG. 4 is a vertical cross-sectional view of the heat exchanger tube.

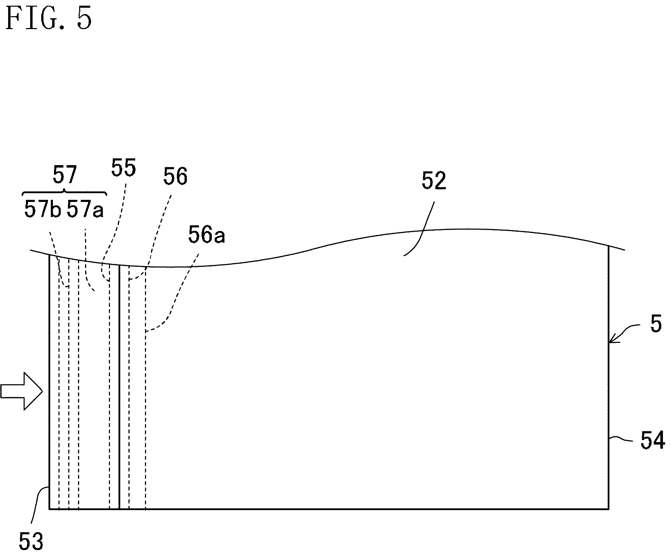

FIG. 5 is a plan view of the heat exchanger tube.

### DESCRIPTION OF EMBODIMENTS

Embodiments of the present invention will be described in detail based on the drawings. The following descriptions of the preferred embodiments are only substantive examples and are not intended to limit the scope or the objectives of use of the present invention.

### (General Configuration of Heat Exchanger 1)

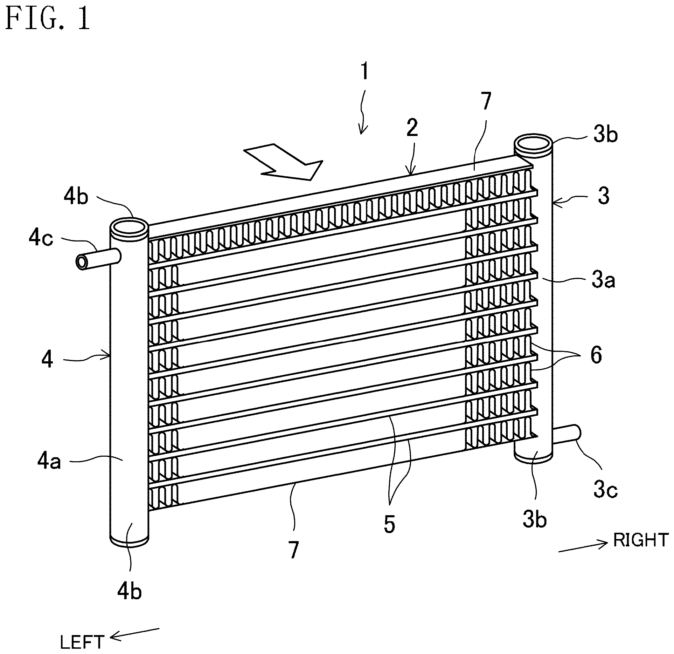

FIG. 1 is a perspective view of heat exchanger 1 having heat exchanger tubes 5 according to an embodiment of the present invention, as viewed from the downstream side of the airflow direction of outside air. The heat exchanger 1 constitutes an element of a refrigeration cycle of an air conditioner for a vehicle (not shown) that is mounted on a vehicle such as an automobile and, specifically, is a heat exchanger arranged outside the vehicle compartment. The heat exchanger arranged outside the vehicle compartment may be a condenser. The heat exchanger 1 is arranged at the front end section of an engine compartment that is provided on the front side of the vehicle compartment and is positioned further toward the front of the vehicle than a radiator (not shown) through which cooling water of the engine flows. Therefore, when the automobile is running, foreign objects such as pebbles come flying from the front side and can easily hit the heat exchanger 1.

The heat exchanger 1 includes: a core 2; a right header tank 3 that is provided on the right side of the core 2; and a left header tank 4 that is provided on the left side of the core 2. In the following description of the embodiment, the front, rear, left, and right sides of the vehicle will be simply referred to as the "front," "rear," "left," and "right," respectively. The heat exchanger 1 is configured to receive wind generated when the automobile runs or when an electric fan (not shown) rotates, and is configured so that both of the wind generated when the automobile runs and the wind generated when the fan rotates flow from the front to the rear of the heat exchanger 1. In other words, the airflow direction of outside air is the direction from the front to the rear and is indicated by a white arrow in each drawing. The heat exchanger 1 may also be used as a heat exchanger for purposes other than an air conditioner for a vehicle.

### (Configuration of Core 2)

The core 2 is configured by integrating a plurality of tubes 5 and fins 6 extending in a lateral direction of the heat exchanger 1 so that they are alternately arranged and stacked to one another in a vertical direction of the heat exchanger 1. The tubes 5 and fins 6 are brazed together. End plates 7 and 7, which are each configured with a flat plate material extending in the lateral direction, are provided at the upper end portion and the lower end portion of the core 2. The upper end plate 7 is brazed to the fin 6 positioned at the upper end portion of the core 2, and the lower end plate 7 is brazed to the fin 6 positioned at the lower end portion of the core 2. The end plates 7 and 7 are made of an aluminum alloy.

### (Configuration of Fin 6)

A thin plate made of an aluminum alloy is shaped into the fin 6, which is a corrugated fin in the form of a continuous wave that is continuous in the lateral direction when viewed along the airflow direction of outside air. The upper end portion of the fin 6 is brazed to a lower surface of the tube 5 adjacent to and above the upper end portion of the fin 6, and the lower end portion of the fin 6 is brazed to an upper surface of the tube 5 adjacent to and below the lower end portion of the fin 6.

### (Configuration of Header Tanks 3 and 4)

The right header tank 3 includes: a tank body part 3a formed in a cylindrical shape extending in the vertical direction; cap members 3b and 3b provided in the upper end portion and the lower end portion of the tank body part 3a; and a refrigerant outflow pipe 3c. The upper side of the tank body part 3a extends upward beyond the upper end plate 7 of the core 2. The lower side of the tank body part 3a extends downward beyond the lower end plate 7 of the core 2. The upper and lower end portions of the tank body part 3a are closed by the cap members 3b and 3b. The refrigerant outflow pipe 3c is provided in the vicinity of the lower end portion of the right header tank 3. The refrigerant outflow pipe 3c allows the refrigerant inside to flow outside and is connected to devices that configure other elements of the refrigeration cycle.

The left header tank 4 includes a refrigerant inflow pipe 4c in addition to a tank body part 4a and cap members 4b and 4b similar to those of the right header tank 3. The refrigerant inflow tube 4c is provided in the vicinity of the upper end portion of the left header tank 4. The refrigerant inflow tube 4c allows the refrigerant to flow from the outside to the inside of the left header tank 4 and is connected to devices that configure other elements of the refrigeration cycle.

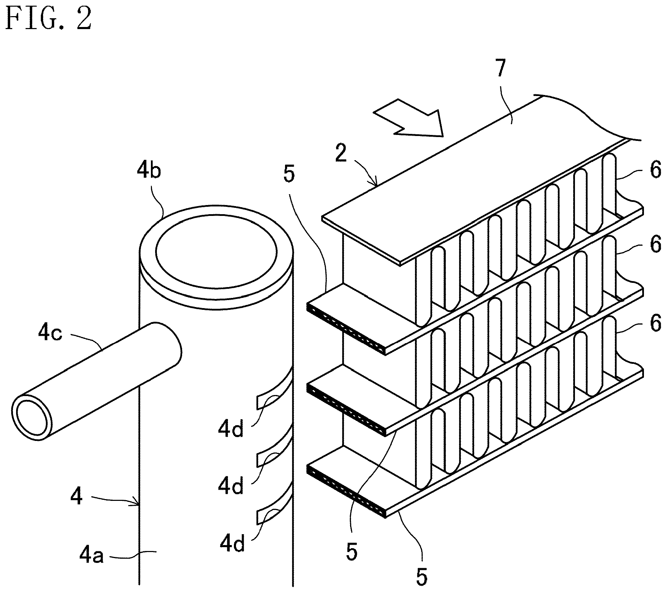

As illustrated in FIG. 2, tube insertion holes 4d, into each of which a left end portion of the tube 5 (i.e., one end portion in the longitudinal direction of the tube 5) is inserted, are formed in the tank body part 4a of the left header tank 4. The tube insertion holes 4d are formed on the right side of the tank body part 4a, and each of the tube insertion holes 4d has an elongated slit-shape extending in the circumferential direction of the tank body part 4a. The tube insertion holes 4d are spaced apart from each other in the vertical direction, and the intervals are the same as those of the tubes 5 of the core 2 in the vertical direction. The length of each tube insertion hole 4d corresponds to a dimension of the tube 5 in the airflow direction of outside air. The width (i.e., the dimension in the vertical direction) of the tube insertion hole 4d corresponds to the thickness of the tube 5. A tube insertion hole similar to the tube insertion hole 4d on the left side is formed on the left side of the tank body part 3 a of the right header tank 3.

### (Configuration of Tube 5)

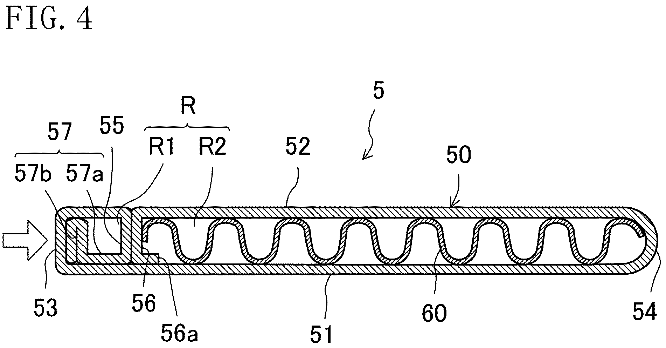

As illustrated in FIG. 1, the tube 5 is a heat exchanger tube which is integrated with the fin 6 while being stacked on the fin 6 and which is inserted into the tube insertion holes 4d (only the tube insertion holes of the left header tank 4 are shown) formed in the header tanks 3 and 4 to constitute the heat exchanger 1. As illustrated in FIG. 4, the tube 5 includes: a tube body part 50 which is obtained by bending one sheet of a plate material and which forms a refrigerant flow path R having a long, flat cross section in the airflow direction of outside air; and an inner fin 60 which is made of a plate material different from the plate material forming the tube body part 50 and which is arranged in the refrigerant flow path R. The plate material for the tube body part 50 can be formed into the shape by, for example, a roll forming method.

The plate material forming the tube body part 50 and the plate material forming the inner fin 60 are made of an aluminum alloy. The plate material forming the tube body part 50 is a double-sided clad material having a brazing filler metal clad on both surfaces of the plate material. Furthermore, the plate material forming the inner fin 60 is a non-clad material (bare material) that is no clad with a brazing filler metal. The double-sided clad material is a material having a brazing filler metal provided in layers on the front and back surfaces of an aluminum alloy plate material. Of the brazing filler metal provided on the plate material forming the tube body part 50, the brazing filler metal provided on the outer surface of the tube body part 50 contains zinc. The zinc content of the brazing filler metal is preferably 0.5 percent by weight or more and 5.0 percent by weight or less. Accordingly, the outer surface of the tube body part 50 becomes lower in potential than the plate material, which causes surface corrosion instead of pitting corrosion.

Furthermore, the plate material forming the inner fin 60 is thinner than the plate material forming the tube body part 50. The reason for this is that, since the tube body part 50 needs to have pressure resistance, the plate thickness is increased to provide satisfactory pressure resistance. However, the inner fin 60 only needs to have improved heat transfer properties and does not need to have pressure resistance; therefore, the thickness thereof is reduced. By making the plate material forming the inner fin 60 thinner, it is possible to reduce the weight of the tube 5.

The tube body part 50 includes: a lower flat wall section 51 (a first flat wall section) and an upper flat wall section 52 (a second flat wall section) extending in the airflow direction of outside air and spaced from each other in the thickness direction of the tube body part 50; an upwind side end-wall section 53 (an end-wall section on one side) that connects one end section (an upstream end section) of the lower flat wall section 51 in the airflow direction of outside air and one end section (an upstream end section) of the upper flat wall section 52 in the airflow direction of outside air; and a downwind side end-wall section 54 (an end-wall section on the other side) that connects the other end section (a downstream end section) of the lower flat wall section 51 in the airflow direction of outside air and the other end section (a downstream end section) of the upper flat wall section 52 in the airflow direction of outside air.

The plate material forming the tube body part 50 is bent toward the other side (downstream side) at the one end section (the upstream end section) of the lower flat wall section 51 in the airflow direction of outside air to form the upwind side end-wall section 53. The plate material forming the tube body part 50 is also bent toward the one side (upstream side) at the other end section (downstream end section) of the lower flat wall section 51 in the airflow direction of outside air to form the downwind side end-wall section 54. The plate material forming the tube body part 50 extends from an upper section of the upwind side end-wall section 53 to the downstream side in the airflow direction of outside air and extends from an upper section of the downwind side end-wall section 54 to the upstream side in the airflow direction of outside air. The plate material forming the tube body part 50 includes: a first middle column section 55 and a second middle column section 56, which protrude from an intermediate section of the upper flat wall section 52 in the airflow direction of outside air toward the inner surface of the lower flat wall section 51 and are joined to the inner surface; and an overlapping section 57 extending from a protruding end of the first middle column section 55 toward the inner surface of the upwind side end-wall section 53 and layered on, and joined to, the inner surface.

The lower flat wall section 51 is a flat wall continuous from a left end portion to a right end portion of the tube body part 50. The upper flat wall section 52 is also continuous from the left end portion to the right end portion of the tube body part 50. The lower flat wall section 51 and the upper flat wall section 52 are spaced apart from each other in the vertical direction and extend substantially parallel to each other. The upwind side end-wall section 53 is configured as a flat wall extending in a direction that intersects with the airflow direction of outside air. Specifically, the upwind side end-wall section 53 extends in the vertical direction and continuously from the left end portion to the right end portion of the tube body part 50. The lower end section of the upwind side end-wall section 53 is continuous with the upstream end section of the lower flat wall section 51 in the airflow direction of outside air, and the upper end section of the upwind side end-wall section 53 is continuous with the upstream end section of the upper flat wall section 52 in the airflow direction of outside air.

The upwind side end-wall section 53 is formed to have a shape different from the shape of the downwind side end-wall section 54. The downwind side end-wall section 54 is configured as a curved wall that is curved so that the intermediate section in the vertical direction is closest to the downstream side and extends continuously from the left end portion to the right end portion of the tube body part 50. The lower end section of the downwind side end-wall section 54 is continuous with the downstream end section of the lower flat wall section 51 in the airflow direction of outside air, and the upper end section of the downwind side end-wall section 54 is continuous with the downstream end section of the upper flat wall section 52 in the airflow direction of outside air. The space surrounded by the lower flat wall section 51, the upper flat wall section 52, the upwind side end-wall section 53, and the downwind side end-wall section 54 forms the refrigerant flow path R.

The refrigerant flow path R communicates with the inside of the left header tank 4 in a state in which the tube 5 is inserted into the left header tank 4, so that the refrigerant in the left header tank 4 can flow into the refrigerant flow path R. The refrigerant flow path R also communicates with the inside of the right header tank 3 in a state in which the tube 5 is inserted into the right header tank 3, so that the refrigerant in refrigerant flow path R can flow into right header tank 3. The refrigerant exchanges heat with the outside air while the refrigerant flows through the refrigerant flow path R of the tube 5.

The first middle column section 55 and the second middle column section 56 are disposed at portions of the upper flat wall section 52 toward the upwind side end-wall section 53 and respectively are a portion on one side of the plate material forming the tube body part 50 and a portion on the other side of the plate material forming the tube body part 50. The first middle column section 55 and the second middle column section 56 extend in the vertical direction so as to be substantially flat and are brazed together in a state in which the first middle column section 55 and the second middle column section 56 are layered on each other in the thickness direction (in the airflow direction of outside air). A second bent section 56a that is bent toward the downstream side in the airflow direction of outside air is formed at the lower end section of the second middle column section 56. The second bent section 56a contacts, and is brazed to, the inner surface of the lower flat wall section 51. It is possible to increase the pressure resistance of the tube body part 50 by joining the second bent section 56a to the inner surface of the lower flat wall section 51.

The overlapping section 57 is integrally provided at a lower end section (the protruding end) of the first middle column section 55. The overlapping section 57 includes: a joined plate section 57a which extends toward the upstream side in the airflow direction of outside air along the inner surface of the lower flat wall section 51 and which is brazed to the inner surface of the lower flat wall section 51; and a protruding plate section 57b which protrudes upward from an upstream end section of the joined plate section 57a in the airflow direction of outside air. The protruding plate section 57b is brazed to the inner surface of the upwind side end-wall section 53 and extends in the vertical direction along the inner surface of the upwind side end-wall section 53. The protruding plate section 57b is a section where two layers of the plate material forming the tube body part 50 are stacked in the thickness direction; and since the protruding plate section 57b is joined to the inner surface of the upwind side end-wall section 53, the upwind end section of the tube body part 50 is made of three layers of the plate material forming the tube body part 50 stacked in the thickness direction.

The refrigerant flow path R includes: a first refrigerant flow path R1 located toward the upstream side with respect to the first middle column section 55 and the second middle column section 56 in the airflow direction of outside air; and a second refrigerant flow path R2 located toward the downstream side with respect to the first middle column section 55 and the second middle column section 56 in the airflow direction of outside air. The dimension of the first refrigerant flow path R1 in the airflow direction of outside air is shorter than the dimension of the second refrigerant flow path R2 in the air flow direction of outside air, so that the cross-sectional area of the first refrigerant flow path R1 is smaller than the cross-sectional area of the second refrigerant flow path R2.

The inner fin 60 is arranged in the tube body part 50 between downwind side end-wall section 54 and the second middle column section 56 and divides the second refrigerant flow path R2 of the tube body part 50 into a plurality of sections. That is, the inner fin 60 has a cross-section of a continuous waveform that is continuous in the airflow direction of outside air, and the upper end section of the inner fin 60 is brazed to the inner surface of the upper flat wall section 52 and the lower end section of the inner fin 60 is brazed to the inner surface of the lower flat wall section 51. The upstream end of the inner fin 60 in the airflow direction of outside air is in contact with, and is brazed to, the inner surface of the second middle column section 56. The downstream end of the inner fin 60 in the airflow direction of outside air is in contact with, and is brazed to, the inner surface of the downwind side end-wall section 54.

The shape of the inner fin 60 is not limited to the illustrated shape. The upper and lower end sections of the inner fin 60 may be flat instead of being curved. The thickness of the plate material forming the inner fin 60 is preferably thinner than the thickness of the plate material forming the tube body part 50, but is not limited thereto. The thickness of the inner fin 60 may be substantially equal to the plate material forming the tube body part 50.

### (Advantages of Embodiment)

According to this embodiment, the plate material forming the tube body part 50 and the plate material forming the inner fin 60 are separate from each other. It is therefore possible to easily change the thickness of the plate material forming the tube body part 50 and the thickness of the plate material forming the inner fin 60 and reduce the weight of the tube 5 while keeping a satisfactory pressure resistance.

The plate material forming the tube body part 50 includes the first middle column section 55 and the second middle column section 56, which protrude from the intermediate section of the upper flat wall section 52 in the airflow direction of outside air toward the inner surface of the lower flat wall section 51 and are joined to the inner surface. Thus, when the tubes 5 and the fins 6 are stacked and bound together in the stacking direction before the tubes 5 are brazed to the fins 6, the compression force acts such that the first middle column section 55 and the second middle column section 56 are pushed against the inner surface of the lower flat wall section 51. This configuration prevents the plate material forming the tube body part 50 from opening, which reduces defects in brazing.

Furthermore, since the overlapping section 57 is joined to the upwind side end-wall section 53 of the tube body part 50 while being layered on the upwind side end-wall section 53, damage by foreign objects hitting the upwind side end-wall section 53 is reduced. Since the overlapping section 57 is joined to the inner surface of the upwind side end-wall section 53, the end section of the plate material is not positioned at the end section, in the airflow direction of outside air, of the outer surface of the tube body part 50; therefore, the end section of the plate material does not interfere with the periphery of the tube insertion holes 4d of the header tanks 3 and 4.

Furthermore, the first middle column section 55 is disposed at a portion of the upper flat wall section 52 toward the upwind side, which means that the first middle column section 55 is positioned closer to the upwind side end-wall section 53 of the tube body part 50. Accordingly, the distance from the protruding end of the first middle column section 55 to the overlapping section 57 can be shortened. Thus, of the plate material forming the tube body part 50, the length of the plate material from the protruding end of the first middle column section 55 to the upwind side end-wall section 53 can be shortened.

Moreover, since the shapes of the upwind side end-wall section 53 and downwind side end-wall section 54 of the tube body part 50 are different from each other, it is possible to prevent erroneous assembly and have the tube correctly assembled, i.e., to assemble the tube such that the upwind side end-wall section 53 is positioned at the upstream side in the airflow direction of outside air.

For example, during running of the automobile, foreign objects may hit the upwind side end-wall section 53 of the tube body part 50. Damage by the foreign objects is reduced by the multi-plate structure formed by the upwind side end-wall section 53 and the overlapping section 57.

The embodiments described above are mere examples in all respects and shall not be interpreted to be limiting. Any variations or modifications falling within the range of equivalents to the claims are all encompassed within the scope of the present invention.

In the above embodiments, the second flat wall section of the present invention forms an upper portion of the tube body part 50 but is not limited thereto; for example, the second flat wall section of the present invention may form a lower portion of the tube body part 50. That is, in a case in which the second flat wall section forms the lower portion of the tube body part 50, the joint section of the first middle column section 55 and the second middle column section 56 is located at the lower position. Thus, although moisture, which is a cause of corrosion for tube body part 50, tends to accumulate on the upper surface of tube body part 50, moisture is less likely to accumulate in the joint section between the first middle column section 55 and the second middle column section 56, which reduces the progression of corrosion from the joint section.

### INDUSTRIAL APPLICABILITY

As described above, the heat exchanger according to the present invention can be used, for example, as a condenser of an air conditioner for a vehicle.

### DESCRIPTION OF REFERENCE CHARACTERS

- 1: Heat Exchanger
- 3: Right Header Tank
- 4: Left Header Tank
- 5: Tube
- 6: Fin
- 50: Tube Body Part
- 51: Lower Flat Wall Section (First Flat Wall Section)
- 52: Upper Flat Wall Section (Second Flat Wall Section)
- 53: Upwind Side End-wall Section (End-wall Section on One Side)
- 54: Downwind Side End-wall Section (End-wall Section on The Other Side)
- 55: First Middle Column Section
- 56: Second Middle Column Section
- 57: Overlapping Section
- R: Refrigerant Flow Path

## Claims

1. A heat exchanger tube (5) which can be integrated with a fin (6) while being stacked on the fin and which can be inserted into a tube insertion hole formed in a header tank to constitute a heat exchanger, the heat exchanger tube (5) comprising:
a tube body part (50) which is obtained by bending one sheet of a plate material and which forms a refrigerant flow path (R) having a long, flat cross section in an airflow direction of outside air; and
an inner fin (60) which is made of a plate material different from the plate material forming the tube body part and which is arranged in the refrigerant flow path, wherein
the tube body (50) part includes: a first flat wall section (51) and a second flat wall section (52) which extend in the airflow direction of outside air and are spaced from each other in a thickness direction of the tube body part; an end-wall section on one side which connects one end section of the first flat wall section in the airflow direction of outside air and one end section of the second flat wall section in the airflow direction of outside air; and an end-wall section on the other side which connects the other end section of the first flat wall section in the airflow direction of outside air and the other end section of the second flat wall section in the airflow direction of outside air, and
the plate material forming the tube body part is bent toward the other side at the one end section of the first flat wall section in the airflow direction of outside air and is bent toward the one side at the other end section of the first flat wall section in the airflow direction of outside air, and
the plate material forming the tube body part includes: a first middle column section (55) and a second middle column section (56) which protrude from an intermediate section of the second flat wall section in the airflow direction of outside air toward an inner surface of the first flat wall section and are joined to the inner surface of the first flat wall section; the heat exchanger tube being **characterized in that** the plate material further includes an overlapping section (57) extending from a protruding end of the first middle column section toward an inner surface of the end-wall section on one side and layered on, and joined to, the inner surface of the end-wall section on one side.

2. The heat exchanger tube of claim 1, wherein
the first middle column section of the tube body part is disposed at a portion of the second flat wall section toward the end-wall section on one side.

3. The heat exchanger tube of claim 1 or 2, wherein
the end-wall section on one side of the tube body part has a shape different from a shape of the end-wall section on the other side.

4. The heat exchanger tube of any one of claims 1 to 3, wherein
the end-wall section on one side of the tube body part is configured as a flat wall extending in a direction that intersects with the airflow direction of outside air.

5. The heat exchanger tube of any one of claims 1 to 4, wherein
the inner fin is arranged in the tube body part between the end-wall section on the other side and the second middle column section and divides the refrigerant flow path of the tube body part into a plurality of sections.

6. The heat exchanger tube of any one of claims 1 to 5, wherein
the plate material forming the inner fin is thinner than the plate material forming the tube body part.

7. The heat exchanger tube of any one of claims 1 to 6, wherein
the plate material forming the tube body part is a double-sided clad material having a brazing filler metal clad on both surfaces of the plate material, and
the plate material forming the inner fin is a non-clad material that is not clad with a brazing filler metal.

8. The heat exchanger tube of claim 7, wherein
of the brazing filler metal provided on the plate material forming the tube body part, the brazing filler metal provided on an outer surface of the tube body part contains zinc.

9. The heat exchanger tube of claim 8, wherein
a zinc content in the brazing filler metal is in a range from 0.5 wt% to 5.0 wt%.

10. The heat exchanger tube of any one of claims 1 to 9, wherein
the second flat wall section of the tube body part constitutes a lower portion of the tube body part.

## Patentansprüche

1. Wärmetauscherröhre (5), die mit einer Lamelle (6) integriert werden kann, während sie auf der Lamelle gestapelt ist, und die in ein Röhreneinführloch eingeführt werden kann, das in einem Ausgleichsbehälter gebildet ist, um einen Wärmetauscher zu bilden, wobei die Wärmetauscherröhre (5) umfasst:
einen Röhrengehäuseteil (50), der erhalten wird, indem ein Blech eines Plattenmaterials gebogen wird, und der einen Kältemittel-Strömungspfad (R) bildet, der einen langen, flachen Querschnitt in einer Luftströmungsrichtung der Außenluft aufweist; und
eine innere Lamelle (60), die aus einem Plattenmaterial hergestellt ist, das sich von dem Plattenmaterial unterscheidet, das den Röhrengehäuseteil bildet, und die in dem Kältemittel-Strömungspfad angeordnet ist, wobei
der Röhrengehäuseteil (50) umfasst: einen ersten flachen Wandabschnitt (51) und einen zweiten flachen Wandabschnitt (52), die sich in der Luftströmungsrichtung der Außenluft erstrecken und in einer Dickenrichtung des Röhrengehäuseteils voneinander beabstandet sind; einen Endwandabschnitt auf einer Seite, der einen Endabschnitt des ersten flachen Wandabschnitts in der Luftströmungsrichtung der Außenluft und einen Endabschnitt des zweiten flachen Wandabschnitts in der Luftströmungsrichtung der Außenluft verbindet; und einen Endwandabschnitt auf der anderen Seite, der den anderen Endabschnitt des ersten flachen Wandabschnitts in der Luftströmungsrichtung der Außenluft und den anderen Endabschnitt des zweiten flachen Wandabschnitts in der Luftströmungsrichtung der Außenluft verbindet, und
das Plattenmaterial, das den Röhrengehäuseteil bildet, zu der anderen Seite an dem einen Endabschnitt des ersten flachen Wandabschnitts in der Luftströmungsrichtung der Außenluft hin gebogen ist und zu der einen Seite an dem anderen Endabschnitt des ersten flachen Wandabschnitts in der Luftströmungsrichtung der Außenluft hin gebogen ist, und
das Plattenmaterial, das den Röhrengehäuseteil bildet, umfasst: einen ersten Mittelsäulenabschnitt (55) und einen zweiten Mittelsäulenabschnitt (56), die von einem Zwischenabschnitt des zweiten flachen Wandabschnitts in der Luftströmungsrichtung der Außenluft zu einer inneren Oberfläche des ersten flachen Wandabschnitts hin vorragen und an die innere Oberfläche des ersten flachen Wandabschnitts angefügt sind;
wobei die Wärmetauscherröhre **dadurch gekennzeichnet ist, dass** das Plattenmaterial weiter einen überlappenden Abschnitt (57) umfasst, der sich von einem vorragenden Ende des ersten Mittelsäulenabschnitts zu einer inneren Oberfläche des Endwandabschnitts auf einer Seite hin erstreckt und auf die innere Oberfläche des Endwandabschnitts auf einer Seite geschichtet und an diese angefügt ist.

2. Wärmetauscherröhre nach Anspruch 1, wobei
der erste Mittelsäulenabschnitt des Röhrengehäuseteils an einem Teilstück des zweiten flachen Wandabschnitts zu dem Endwandabschnitt auf einer Seite hin angeordnet ist.

3. Wärmetauscherröhre nach Anspruch 1 oder 2, wobei
der Endwandabschnitt auf einer Seite des Röhrengehäuseteils eine Form aufweist, die sich von einer Form des Endwandabschnitts auf der anderen Seite unterscheidet.

4. Wärmetauscherröhre nach einem der Ansprüche 1 bis 3, wobei
der Endwandabschnitt auf einer Seite des Röhrengehäuseteils als eine flache Wand ausgestaltet ist, die sich in einer Richtung erstreckt, die sich mit der Luftströmungsrichtung der Außenluft schneidet.

5. Wärmetauscherröhre nach einem der Ansprüche 1 bis 4, wobei
die innere Lamelle in dem Röhrengehäuseteil zwischen dem Endwandabschnitt auf der anderen Seite und dem zweiten Mittelsäulenabschnitt angeordnet ist und den Kältemittel-Strömungspfad des Röhrengehäuseteils in eine Vielzahl von Abschnitten teilt.

6. Wärmetauscherröhre nach einem der Ansprüche 1 bis 5, wobei
das Plattenmaterial, das die innere Lamelle bildet, dünner ist als das Plattenmaterial, das den Röhrengehäuseteil bildet.

7. Wärmetauscherröhre nach einem der Ansprüche 1 bis 6, wobei
das Plattenmaterial, das den Röhrengehäuseteil bildet, ein doppelseitiges plattiertes Material ist, das eine Hartlotplattierung auf beiden Oberflächen des Plattenmaterials aufweist, und
das Plattenmaterial, das die innere Lamelle bildet, ein nicht-plattiertes Material ist, das nicht mit einem Hartlot plattiert ist.

8. Wärmetauscherröhre nach Anspruch 7, wobei
von dem Hartlot, das auf dem Plattenmaterial vorgesehen ist, das den Röhrengehäuseteil bildet, das Hartlot, das auf einer äußeren Oberfläche des Röhrengehäuseteils vorgesehen ist, Zink enthält.

9. Wärmetauscherröhre nach Anspruch 8, wobei
ein Zinkgehalt in dem Hartlot in einem Bereich von 0,5 Gew.-% bis 5,0 Gew.-% liegt.

10. Wärmetauscherröhre nach einem der Ansprüche 1 bis 9, wobei
der zweite flache Wandabschnitt des Röhrengehäuseteils ein unteres Teilstück des Röhrengehäuseteils bildet.

## Revendications

1. Tube d'échangeur de chaleur (5) qui peut être intégré à une ailette (6) tout en étant empilé sur l'ailette et qui peut être inséré dans un trou d'insertion de tube formé dans un réservoir collecteur pour constituer un échangeur de chaleur, le tube d'échangeur de chaleur (5) comprenant :
une partie de corps de tube (50) qui est obtenue en pliant une feuille d'un matériau en plaque et qui forme un trajet d'écoulement de fluide frigorigène (R) ayant une longue section transversale plate dans une direction d'écoulement d'air de l'air extérieur ; et
une ailette interne (60) qui est réalisée en un matériau en plaque différent du matériau en plaque formant la partie de corps de tube et qui est agencée dans le trajet d'écoulement de fluide frigorigène, dans lequel
la partie de corps de tube (50) comporte : une première section de paroi plate (51) et une deuxième section de paroi plate (52) qui s'étendent dans la direction d'écoulement d'air de l'air extérieur et sont espacées l'une de l'autre dans une direction d'épaisseur de la partie de corps de tube ; une section de paroi d'extrémité sur un côté qui relie une section d'extrémité de la première section de paroi plate dans la direction d'écoulement d'air de l'air extérieur et une section d'extrémité de la deuxième section de paroi plate dans la direction d'écoulement d'air de l'air extérieur ; et une section de paroi d'extrémité sur l'autre côté qui relie l'autre section d'extrémité de la première section de paroi plate dans la direction d'écoulement d'air de l'air extérieur et l'autre section d'extrémité de la deuxième section de paroi plate dans la direction d'écoulement d'air de l'air extérieur, et
le matériau en plaque formant la partie de corps de tube est plié vers l'autre côté au niveau de la section d'extrémité de la première section de paroi plate dans la direction d'écoulement d'air de l'air extérieur et est plié vers le côté au niveau de l'autre section d'extrémité de la première section de paroi plate dans la direction d'écoulement d'air de l'air extérieur, et
le matériau en plaque formant la partie de corps de tube comporte : une première section de colonne médiane (55) et une deuxième section de colonne médiane (56) qui font saillie à partir d'une section intermédiaire de la deuxième section de paroi plate dans la direction d'écoulement d'air de l'air extérieur vers une surface interne de la première section de paroi plate et sont reliées à la surface interne de la première section de paroi plate ;
le tube d'échangeur de chaleur étant **caractérisé en ce que** le matériau en plaque comporte en outre une section de chevauchement (57) s'étendant à partir d'une extrémité en saillie de la première section de colonne médiane vers une surface interne de la section de paroi d'extrémité sur un côté et déposée en couche sur et reliée à la surface interne de la section de paroi d'extrémité sur un côté.

2. Tube d'échangeur de chaleur de la revendication 1, dans lequel
la première section de colonne médiane de la partie de corps de tube est disposée au niveau d'une partie de la deuxième section de paroi plate vers la section de paroi d'extrémité sur un côté.

3. Tube d'échangeur de chaleur de la revendication 1 ou 2, dans lequel la section de paroi d'extrémité sur un côté de la partie de corps de tube a une forme différente de la forme de la section de paroi d'extrémité sur l'autre côté.

4. Tube d'échangeur de chaleur de l'une quelconque des revendications 1 à 3, dans lequel
la section de paroi d'extrémité sur un côté de la partie de corps de tube est configurée comme une paroi plate s'étendant dans une direction qui coupe la direction d'écoulement d'air de l'air extérieur.

5. Tube d'échangeur de chaleur de l'une quelconque des revendications 1 à 4, dans lequel
l'ailette interne est agencée dans la partie de corps de tube entre la section de paroi d'extrémité sur l'autre côté et la deuxième section de colonne médiane et divise le trajet d'écoulement de fluide frigorigène de la partie de corps de tube en une pluralité de sections.

6. Tube d'échangeur de chaleur de l'une quelconque des revendications 1 à 5, dans lequel
le matériau en plaque formant l'ailette interne est plus mince que le matériau en plaque formant la partie de corps de tube.

7. Tube d'échangeur de chaleur de l'une quelconque des revendications 1 à 6, dans lequel
le matériau en plaque formant la partie de corps de tube est un matériau de revêtement double face ayant un métal d'apport de brasage revêtu sur les deux surfaces du matériau en plaque, et
le matériau en plaque formant l'ailette interne est un matériau non revêtu qui n'est pas revêtu d'un métal d'apport de brasage.

8. Tube d'échangeur de chaleur de la revendication 7, dans lequel
du métal d'apport de brasage prévu sur le matériau en plaque formant la partie de corps de tube, le métal d'apport de brasage prévu sur une surface externe de la partie de corps de tube contient du zinc.

9. Tube d'échangeur de chaleur de la revendication 8, dans lequel
une teneur en zinc dans le métal d'apport de brasage se trouve dans une plage allant de 0,5% en poids à 5,0% en poids.

10. Tube d'échangeur de chaleur de l'une quelconque des revendications 1 à 9, dans lequel
la deuxième section de paroi plate de la partie de corps de tube constitue une partie inférieure de la partie de corps de tube.
